# EUROPEAN PATENT APPLICATION

(11) **EP 4 822 525 A1**
(43) Date of publication of application: **14.10.2026**
(21) Application number: 24899679.5
(22) Date of filing: 26.11.2024
(51) Int. Cl.: G06F 9/451, G06Q 50/00

(54) **MEDIA CONTENT INFORMATION DISPLAY METHOD AND APPARATUS, ELECTRONIC DEVICE AND STORAGE MEDIUM**

(30) Priority: 06.12.2023 CN 202311667676
(71) Applicant: Beijing Zitiao Network Technology Co., Ltd., Beijing 100190 (CN)
(72) Inventor: YANG, Jiahui, Beijing 100028 (CN)
(74) Representative: Grünecker Patent- und Rechtsanwälte PartG mbB
(86) International application number: PCT/CN2024/134593
(87) International publication number: WO 2025/119039

(57) **Abstract**

Embodiments of the present disclosure provide a method and an apparatus for displaying media content information, an electronic device, and a storage medium. The method includes: receiving a personal page display operation for a target user; in response to the personal page display operation, displaying a personal page of the target user; and displaying preset media content information of the target user in a display area of preset user identification information in the personal page, the preset user identification information being identification information of the target user, and the preset media content information being media content information of first media content posted by the target user.

## Description

### CROSS-REFERENCE TO RELATED APPLICATION(S)

The present application claims priority to Chinese Patent Application No. 202311667676.1, filed on December 6, 2023, and entitled "MEDIA CONTENT INFORMATION DISPLAY METHOD AND APPARATUS, ELECTRONIC DEVICE, AND STORAGE MEDIUM", which is incorporated herein by reference in its entirety.

### FIELD

Embodiments of the present disclosure relate to the field of computer technologies, and in particular, to a method and an apparatus for displaying media content information, an electronic device, and a storage medium.

### BACKGROUND

At present, user identification information may be displayed on a user's personal page (Profile), for example, the user's avatar and/or nickname may be displayed.

### SUMMARY

Embodiments of the present disclosure provide a method and an apparatus for displaying media content information, an electronic device, and a storage medium.

In a first aspect, an embodiment of the present disclosure provides a method for displaying media content information, including:
receiving a personal page display operation for a target user;
displaying, in response to the personal page display operation, a personal page of the target user; and displaying preset media content information of the target user in a display area of preset user identification information in the personal page, the preset user identification information being identification information of the target user, and the preset media content information being media content information of first media content posted by the target user.

In a second aspect, an embodiment of the present disclosure further provides an apparatus for displaying media content information, including:
an operation receiving module, configured to receive a personal page display operation for a target user; and
a personal page display module, configured to display, in response to the personal page display operation, a personal page of the target user, and display preset media content information of the target user in a display area of preset user identification information in the personal page, the preset user identification information being identification information of the target user, and the preset media content information being media content information of first media content posted by the target user.

In a third aspect, an embodiment of the present disclosure further provides an electronic device, including:
one or more processors; and
a memory, configured to store one or more programs,
when the one or more programs are executed by the one or more processors, the one or more processors are caused to implement the method for displaying media content information according to the embodiments of the present disclosure.

In a fourth aspect, an embodiment of the present disclosure further provides a computer-readable storage medium, on which a computer program is stored, and when the program is executed by a processor, the method for displaying media content information according to the embodiments of the present disclosure is implemented.

According to the method and the apparatus for displaying media content information, the electronic device, and the storage medium provided by the embodiments of the present disclosure, a personal page display operation for a target user is received; a personal page of the target user is displayed in response to the personal page display operation; and preset media content information of the target user is displayed in a display area of preset user identification information in the personal page, the preset user identification information being identification information of the target user, and the preset media content information being media content information of first media content posted by the target user.

### BRIEF DESCRIPTION OF THE DRAWINGS

The above and other features, advantages, and aspects of the embodiments of the present disclosure will become more apparent in combination with the drawings and with reference to the following specific embodiments. Throughout the drawings, the same or similar reference numerals represent the same or similar elements. It should be understood that the drawings are schematic and that parts and elements are not necessarily drawn to scale.
FIG. 1 is a schematic flowchart of a method for displaying media content information provided by an embodiment of the present disclosure;
FIG. 2 is a schematic diagram of displaying preset user identification information provided by an embodiment of the present disclosure;
FIG. 3 is a schematic diagram of displaying another preset user identification information provided by an embodiment of the present disclosure;
FIG. 4 is a schematic flowchart of another method for displaying media content information provided by an embodiment of the present disclosure;
FIG. 5 is a schematic diagram of displaying still another preset user identification information provided by an embodiment of the present disclosure;
FIG. 6 is a structural block diagram of an apparatus for displaying media content information provided by an embodiment of the present disclosure; and
FIG. 7 is a schematic structural diagram of an electronic device provided by an embodiment of the present disclosure.

### DETAILED DESCRIPTION OF EMBODIMENTS

Hereinafter, embodiments of the present disclosure will be described in more detail with reference to the drawings. Although some embodiments of the present disclosure are shown in the drawings, it should be understood that the present disclosure may be implemented in various forms and should not be construed as limited to the embodiments set forth herein. Instead, these embodiments are provided for a more thorough and complete understanding of the present disclosure. It should be understood that the drawings and embodiments of the present disclosure are only used for illustrative purposes, and are not used to limit the scope of protection of the present disclosure.

It should be understood that various steps described in method implementations of the present disclosure may be executed in different orders and/or in parallel. In addition, the method implementations may include additional steps and/or omit the execution of the illustrated steps. The scope of the present disclosure is not limited in this regard.

The term "include/comprise" and its variants used herein are open-ended inclusions, that is, "include/comprise but not limited to". The term "based on" is "at least partially based on". The term "one embodiment" means "at least one embodiment"; the term "another embodiment" means "at least one another embodiment"; and the term "some embodiments" means "at least some embodiments". Relevant definitions of other terms will be given in the following description.

It should be noted that concepts such as "first" and "second" mentioned in the present disclosure are only used to distinguish different apparatuses, modules or units, and are not used to limit the order or interdependence of the functions executed by these apparatuses, modules or units.

It should be noted that the modification of "one" and "multiple" mentioned in the present disclosure is schematic rather than restrictive, and those skilled in the art should understand that unless otherwise clearly indicated in the context, it should be understood as "one or multiple".

The names of messages or information exchanged between multiple apparatuses in the implementations of the present disclosure are only used for illustrative purposes, and are not used to limit the scope of these messages or information.

It may be understood that before using the technical solutions disclosed in the embodiments of the present disclosure, the user shall be informed of the type, range of use, use scenarios, etc. of personal information involved in the present disclosure in an appropriate manner and obtain the authorization of the user in accordance with relevant laws and regulations.

For example, in response to receiving an active request from a user, prompt information is sent to the user to clearly prompt the user that the requested operation will require access to and use of the user's personal information. In this way, the user may independently choose, based on the prompt information, whether to provide the personal information to software or hardware, such as an electronic device, an application, a server, or a storage medium, that performs the operations of the technical solutions of the present disclosure.

As an optional but non-limiting implementation, in response to receiving the active request from the user, the prompt information may be sent to the user in the form of, for example, a pop-up window, in which the prompt information may be presented in text. In addition, the pop-up window may also include a selection control for the user to choose whether to "agree" or "disagree" to provide the personal information to the electronic device.

It may be understood that the above process of notifying and obtaining user authorization is only illustrative, and does not constitute a limitation on the implementations of the present disclosure. Other manners that satisfy the relevant laws and regulations may also be applied to the implementations of the present disclosure.

The manner of displaying the identification information of the current user on his/her personal page is relatively monotonous.

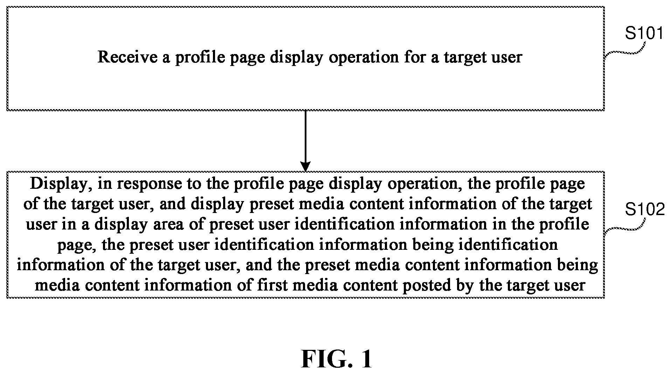

FIG. 1 is a schematic flowchart of a method for displaying media content information provided by an embodiment of the present disclosure. The method may be executed by an apparatus for displaying media content information, where the apparatus may be implemented in software and/or hardware, and may be configured in an electronic device, typically in a mobile phone or a tablet computer. The method for displaying media content information provided by the embodiment of the present disclosure is applicable to the scenario of displaying media content information on a personal page, and is particularly applicable to the scenario of displaying media content information in the form of user identification information on a personal page. As shown in FIG. 1, the method for displaying media content information provided by the embodiment may include the following steps.

S101, a personal page display operation for a target user is received.

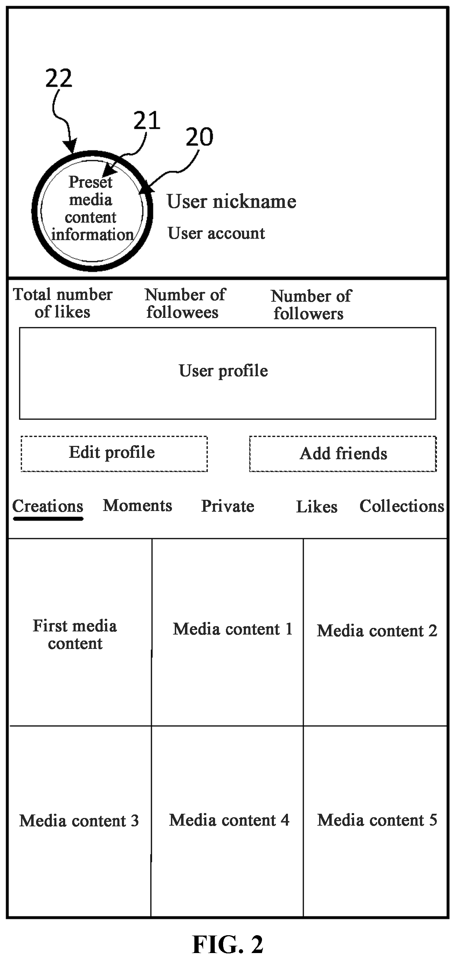

The personal page display operation may be a trigger operation used to instruct to display a personal page of a user. The manner of performing the personal page display operation is not limited, as long as the effect of instructing to display the personal page may be achieved. The target user may be a user corresponding to the personal page instructed to be displayed by the personal page display operation, in other words, the personal page display operation is used to instruct to display a personal page of the target user. The target user and a current user who performs the personal page display operation may be the same user or different users. Exemplarily, the current user may view his/her own personal page by performing the personal page display operation, or may view personal pages of other users other than the current user by performing the personal page display operation. As shown in FIG. 2, user-related content such as user information and user works set by the user may be displayed on the personal page, and the user works may include at least one piece of media content.

Exemplarily, when the current user wants to view a personal page of a user, the current user may perform a personal page display operation for the user. Accordingly, the current application may receive the personal page display operation performed by the current user.

S102, in response to the personal page display operation, the personal page of the target user is displayed; and the preset media content information of the target user is displayed in the display area of the preset user identification information in the personal page, the preset user identification information being the identification information of the target user, and the preset media content information being the media content information of the first media content posted by the target user.

The preset user identification information may be certain identification information of the target user, such as the avatar and/or nickname of the target user, etc. Optionally, the preset user identification information includes the avatar of the target user. The following uses an example in which the preset user identification information is the avatar of the target user for illustration. The display area of the preset user identification information may be understood as an area on the personal page of the target user that is used to display the preset user identification information of the target user.

The first media content may be certain media content posted by the target user. Optionally, the first media content is the latest media content posted by the target user, and/or the first media content is media content posted by the target user within a first preset duration. For example, the first media content may be the latest media content posted by the target user within the last first preset duration. The first preset duration is not limited, for example, the first preset duration may be 1 day, 3 days, or 5 days, etc. The first media content may be any type of media content; or it may be a media content of a specified type, such as media content posted by the target user through a specified posting manner, which may be specifically set as needed.

The preset media content information may be media content information of the first media content displayed in the display area of the preset user identification information. The preset media content information may be related information of the first media content, such as a media content identifier and/or profile information of the first media content. Optionally, the preset media content information includes a cover page of the first media content and/or at least part of the media content images associated with the first media content. At least part of the media content images associated with the first media content may be, for example, images of at least part of images and/or at least part of video frames included in the first media content. Taking the first media content as video content for an example, at least part of media content images of the first media content may be, for example, images displayed by key frames (for example, highlight clips) of the first media content, images in one or more video clips of the first media content, or video images of all video frames in the first media content, etc.

Specifically, in the case that the personal page display operation for the target user is received from the current user, the personal page of the target user may be displayed in response to the personal page display operation; and the preset media content information 21 of the target user is displayed in the display area 20 of the preset user identification information in the personal page, as shown in FIG. 2 (in the figure, the current user and the target user are the same user as an example). For example, the cover page of the first media content and/or at least part of the media content images of the first media content may be displayed in the display area 20 of the avatar of the target user in the personal page to prompt the current user of the first media content posted by the target user.

In the present embodiment, when the personal page of the target user is displayed, exemplarily, the media content information (that is, the preset media content information) of the first media content posted by the target user may be displayed as the preset user identification information of the target user. For example, the media content information of the first media content may be used to replace the original user identification information of the target user for display in the display area of the preset user identification information in the personal page.

At this time, optionally, the displaying the preset media content information of the target user in the display area of the preset user identification information in the personal page includes: taking the preset media content information of the target user as the preset user identification information of the target user, and displaying the preset user identification information in the display area of the preset user identification information in the personal page.

Taking the preset user identification information as the avatar for an example, when the personal page of the target user is displayed in response to the personal page display operation for the target user, the media content information of the first media content posted by the target user may be taken as the avatar of the target user, and the media content information of the first media content may be displayed in the display area of the avatar in the personal page of the target user, as shown in FIG. 2.

It should be noted that in the process of displaying the preset media content information of the target user, as the preset user identification information of the target user on the personal page, the display style of the preset user identification information of the target user at other display positions other than the personal page of the target user is not limited. For example, when the preset user identification information of the target user is displayed at other display positions other than the personal page of the target user, the preset user identification information may be displayed as the original identification information and/or the preset media content information of the target user, which may be specifically and flexibly set as needed.

In some implementations, the preset media content information of the target user may be used as the preset user identification information of the target user for display on the personal page. Exemplarily, when the first media content is not updated, for example, when the target user does not post new first media content, each time the personal page of the target user is displayed, the preset user identification information of the target user may be displayed as the preset media content information of the target user on the personal page; and when the first media content is updated, for example, when the target user posts new first media content, when the personal page of the target user is displayed, the preset user identification information of the target user may be displayed as the preset media content information of the updated first media content of the target user on the personal page.

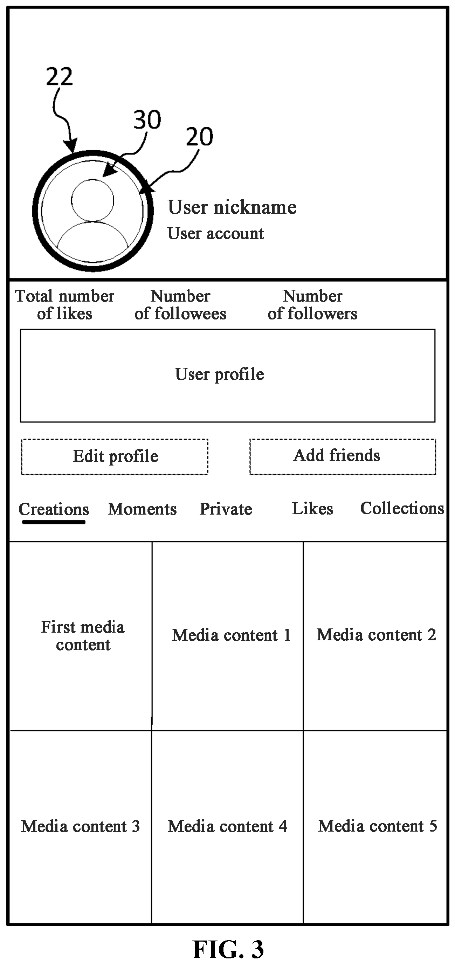

In other implementations, after using the preset media content information 21 of the target user as the preset user identification information of the target user to display on the personal page for a second preset duration, the preset user identification information may be switched from the preset media content information 21 of the target user to the original user identification information 30 of the target user. For example, within the second preset duration after the first media content is posted, the original user identification information 30 of the target user is replaced with the preset media content information 21 of the target user for display on the personal page of the target user, as shown in FIG. 2; and after the second preset duration of the first media content being posted, the preset user identification information of the target user is switched back to the original user identification information 30 of the target user for display on the personal page of the target user, as shown in FIG. 3.

At this time, optionally, after the displaying the preset media content information of the target user in the display area of the preset user identification information in the personal page, the method further includes: switching the preset user identification information from the preset media content information to original user identification information of the target user when the display duration of the preset media content information reaches a second preset duration.

The original user identification information may be understood as identification information set by the target user. Taking the preset user identification information as the avatar for an example, the original user identification information may be the avatar set by the target user. The second preset duration is not limited; for example, the second preset duration may be set to 5s, 10s, or 30s, etc.

In some implementations, the target user and the current user may be the same user, and the current user may perform the personal page display operation by triggering a posting control of the first media content. At this time, optionally, before the receiving the personal page display operation for the target user, the method further includes: displaying the posting control of the first media content, the posting control being configured to trigger to perform the personal page display operation; and the method for displaying media content information provided by the embodiment further includes: in response to the personal page display operation, posting the first media content.

The posting control of the first media content may be a control used to instruct to post the first media content, and the posting control may be used to trigger to performance of the personal page display operation.

In the above implementations, in the case that it is detected that the current user triggers the posting control of the media content, for example, in the case that it is detected that the current user triggers the posting control corresponding to the media content of the preset type, the current page may be switched to the personal page of the current user to simplify the operations required for the current user to view the media content information of the media content that has just been posted and/or the media content posted by the current user.

Exemplarily, the posting control of the first media content may be displayed on an editing page or a posting page of the first media content. In this way, when it is detected that the current user triggers the posting control of the first media content, it may be determined that the personal page display operation for the current user (that is, the target user) is received, and in response to the personal page display operation, the first media content is posted, the current page is switched from the editing page or the posting page of the first media content to the personal page of the current user, and the media content information of the first media content posted by the current user is displayed in the display area of the preset user identification information in the personal page, as shown in FIG. 2.

In some implementations, the target user and the current user may be the same user or different users, and the current user may view the personal page of the target user by performing the personal page display operation. For example, the current user may view the personal page of the target user by performing the personal page display operation when viewing certain media content posted by the target user. At this time, optionally, before receiving the personal page display operation for the target user, the method further includes: displaying a media content display page, and displaying second media content in the media content display page, the second media content being posted by the target user.

The media content display page may be a page used to display media content, such as a page used to display media content posted by the same or different users. Exemplarily, the media content display page may be used to display recommended media content, media content posted by users who have a preset association relationship with the current user, and/or media content posted by the target user. The preset association relationship may include, for example, a follow relationship or a friend relationship, which is not limited to the present embodiment.

The second media content may be the media content displayed on the media content display page when the personal page display operation is received, and at this time, the target user may be the poster of the second media content. The manner of performing the personal page display operation by the current user on the media content display page is not limited. For example, the current user may perform the personal page display operation for the target user by triggering the avatar of the target user displayed on the media content display page, or perform the personal page display operation for the target user by performing a corresponding swipe gesture (such as swiping left), etc.

Exemplarily, the media content display page may be displayed, and media content may be displayed on the media content display page. When the personal page display operation for the poster (that is, the target user) of the media content (that is, the second media content) currently displayed on the media content display page is received from the current user, for example, when it is detected that the current user triggers the avatar of the poster or swipes left on the media content display page, it may be determined that the personal page display operation for the poster is received, the personal page of the poster is displayed, and the preset media content information of the target user is displayed in the display area of the preset user identification information of the target user on the personal page.

According to the method for displaying media content information provided by the present embodiment, a personal page display operation for a target user is received; a personal page of the target user is displayed in response to the personal page display operation; and preset media content information of the target user is displayed in a display area of preset user identification information in the personal page, the preset user identification information being identification information of the target user, and the preset media content information being media content information of first media content posted by the target user. According to the technical solution described above, the present embodiment displays the media content information of the media content posted by the target user in the display area of the user identification information on the personal page, which may enrich the display manners of the user identification information and the media content information on the personal page, and reduce the difficulty of viewing the media content information.

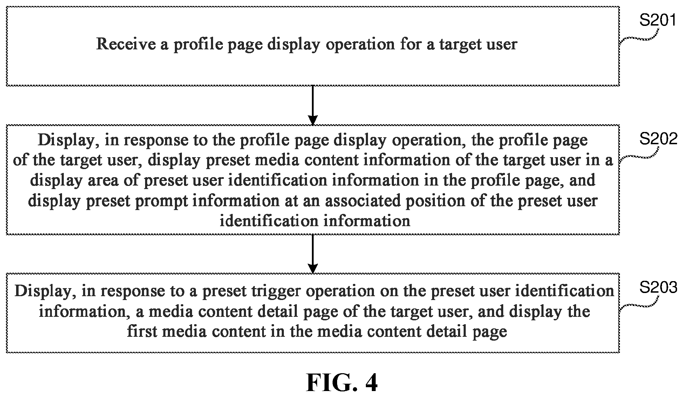

FIG. 4 is a schematic flowchart of another method for displaying media content information provided by an embodiment of the present disclosure. The solution in the present embodiment may be combined with one or more optional solutions in the above embodiment. Optionally, the displaying the preset media content information of the target user in the display area of the preset user identification information in the personal page includes: displaying the preset media content information of the target user in the display area of the preset user identification information in the personal page, and displaying preset prompt information at an associated position of the preset user identification information, the preset prompt information being used to prompt to view media content posted by the target user.

Optionally, after the displaying the personal page of the target user, the method further includes: in response to a preset trigger operation on the preset user identification information, displaying a media content detail page of the target user, and displaying the first media content in the media content detail page.

Accordingly, as shown in FIG. 4, the method for displaying media content information provided by the embodiment may include the following steps.

S201, a personal page display operation for a target user is received.

S202, in response to the personal page display operation, the personal page of the target user is displayed, the preset media content information of the target user is displayed in the display area of the preset user identification information in the personal page, and preset prompt information is displayed at an associated position of the preset user identification information, the preset user identification information being identification information of the target user, the preset media content information being media content information of first media content posted by the target user, and the preset prompt information being used to prompt to view media content posted by the target user.

The preset prompt information may be information used to prompt the current user to view the media content posted by the target user. The preset prompt information may be displayed when the target user has media content (including the first media content) that meets a preset condition. The preset condition may be flexibly set as needed, for example, the preset condition may be set as media content posted by the target user within a first preset duration and/or media content of a preset type posted by the target user, etc.

In the present embodiment, the current user may be prompted by the preset prompt information on the personal page of the target user to view the media content posted by the target user, for example, the current user may be prompted by the preset prompt information that the target user has posted media content that meets the preset condition.

Exemplarily, when the personal page display operation for the target user is received, the personal page of the target user may be displayed in response to the personal page display operation, the preset media content information 21 of the target user is displayed in the display area 20 of the preset user identification information in the personal page, and the preset prompt information 22 is displayed at the associated position of the preset user identification information, as shown in FIG. 2, so as to prompt the current user to view the media content posted by the target user through the ring-shaped preset prompt information 22.

The information type of the preset prompt information is not limited; for example, the preset prompt information may be characters, graphics, and/or patterns. When the preset prompt information is a graphic, its specific shape is not limited; for example, the preset prompt information may be ring-shaped, circular, or polygonal, etc. The display position of the preset prompt information may be flexibly set, for example, the preset prompt information may be displayed above, below, on the left, or on the right of the preset user identification information, etc. Exemplarily, as shown in FIG. 2, the preset prompt information may be ring-shaped, and the ring shape may surround the preset user identification information, for example, the preset user identification information may be displayed inside the ring shape.

In some implementations, the preset prompt information may have different display styles, which may be used to prompt the current user whether he/she has viewed the media content (such as the first media content) that is posted by the target user and meets the preset condition. At this time, optionally, the displaying the preset prompt information at the associated position of the preset user identification information includes: if the current user has not viewed the first media content, displaying the preset prompt information at the associated position of the preset user identification information with a first display style; and/or if the current user has viewed the first media content, displaying the preset prompt information at the associated position of the preset user identification information with a second display style.

The first display style and the second display style may be different display styles of the preset prompt information. When in the first display style and when in the second display style, the preset prompt information may have different colors, shapes, and/or contain different characters, etc. The following uses an example in which the preset prompt information has different colors for illustration.

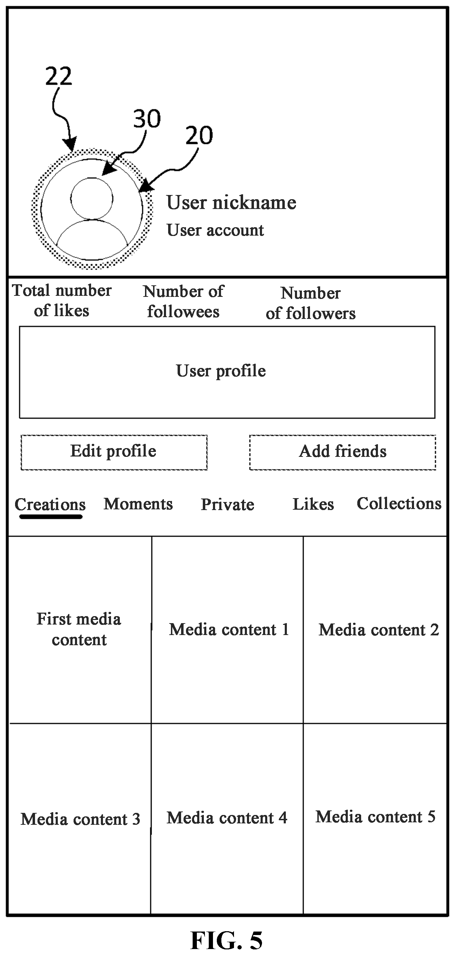

Exemplarily, if the current user has not viewed the first media content posted by the target user, the preset prompt information 22 may be displayed at the associated position of the preset user identification information using the first display style, as shown in FIG. 2; and if the current user has viewed the first media content posted by the target user, the preset prompt information 22 may be displayed at the associated position of the preset user identification information using the second display style, as shown in FIG. 5, and the viewing state of the current user for the first media content is displayed by ring-shaped identifications of different colors.

In the present embodiment, after the preset prompt information is displayed, when a current condition satisfies a cancel display condition of the preset prompt information, the display of the preset prompt information may also be cancelled to avoid disturbing the user from viewing the page content of the personal page. At this time, optionally, after the displaying the preset prompt information at the associated position of the preset user identification information, the method further includes: cancelling display of the preset prompt information when the current condition satisfies the cancel display condition of the preset prompt information. The cancel display condition of the preset prompt information may be set as needed, for example, the cancel display condition of the preset prompt information may be set as the display duration of the preset prompt information reaching a specified duration or the target user having no media content that meets the preset condition, etc. The specified duration may be, for example, 12 hours, 1 day, or 3 days, which is not limited in the present embodiment.

S203, in response to a preset trigger operation on the preset user identification information, a media content detail page of the target user is displayed, and the first media content is displayed in the media content detail page.

The preset trigger operation may be a trigger operation used to instruct to display the media content detail page of the target user. The preset trigger operation may act on the preset user identification information displayed on the personal page of the target user, for example, the preset trigger operation may be a click operation acting on the preset user identification information, etc.

The execution timing of the preset trigger operation is not limited. Exemplarily, the preset trigger operation may act during a period when the preset user identification information is displayed as the preset media content information and/or the original user identification information, or act during a process when the preset prompt information is and/or is not displayed at the associated position of the preset user identification information.

Optionally, the preset trigger operation is performed during the display of the preset media content information and/or during the display of the preset prompt information. For example, when the preset user identification information on the personal page of the target user is displayed in a style of the preset media content information, and/or when the preset prompt information is displayed at the associated position of the preset user identification information, the preset user identification information may support the user to trigger to performance of the preset trigger operation. It may be understood that in this case, when the preset user identification information is displayed as the original user identification information and the preset prompt information is not displayed at the associated position, the preset user identification information may not support the user to trigger, or may support the user to trigger to perform a trigger operation different from the preset trigger operation, for example, support the user to trigger to view details of the original user identification information, which may be specifically set as needed.

The media content detail page of the target user may be a media content display page used to display media content posted by the target user. The media content detail page of the target user may be used to display at least part of media content (including the first media content) posted by the target user.

Exemplarily, after the personal page of the target user is displayed, when the preset trigger operation on the preset user identification information displayed on the personal page is received, for example, when it is detected that the current user triggers the preset user identification information displayed on the personal page during the display of the preset media content information and/or the preset prompt information, the current page may be switched from the personal page of the target user to the media content detail page of the target user, and the media content image of the first media content is displayed on the media content detail page.

In addition, after the media content image of the first media content is displayed on the media content detail page, the user may also be supported to switch the media content displayed on the media content detail page. For example, the current user may switch to view different media content posted by the target user on the media content detail page by performing a media content switching operation.

In an optional embodiment, taking a media content posting scenario as an example, the first media content may be media content of a set type, such as media content posted as a daily creation; and the preset user identification information may be an avatar.

In this way, when it is detected that the current user performs a trigger operation (that is, the personal page display operation) to instruct to post the first media content as a daily creation, the first media content may be posted as a daily creation of the current user, the current page is switched to the personal page of the current user, the avatar set by the current user is replaced with the media content information of the first media content for a second preset duration on the personal page, and a ring (that is, the preset prompt information) is displayed around the avatar of the current user using the first display style, as shown in FIG. 2.

After the display duration of the media content information of the first media content reaches the second preset duration, the displayed media content information may be switched to the avatar (that is, the original user identification information) set by the current user, as shown in FIG. 3.

During the display of the ring, when it is detected that the current user triggers the avatar displayed on the personal page, the current page may be switched from the personal page of the current user to the media content detail page of the current user, and the first media content is displayed on the media content detail page to facilitate the current user to view the media content that has just been posted. In addition, when it is detected that the current user performs a return operation on the media content detail page, the current page may be switched back from the media content detail page of the current user to the personal page of the current user, and at this time, the ring on the personal page is switched from the first display style (as shown in FIG. 2) to the second display style (as shown in FIG. 5).

According to the method for displaying media content information provided by the present embodiment, the content displayed on the personal page may be further enriched, and convenience is provided for the current user to view the media content posted by the target user.

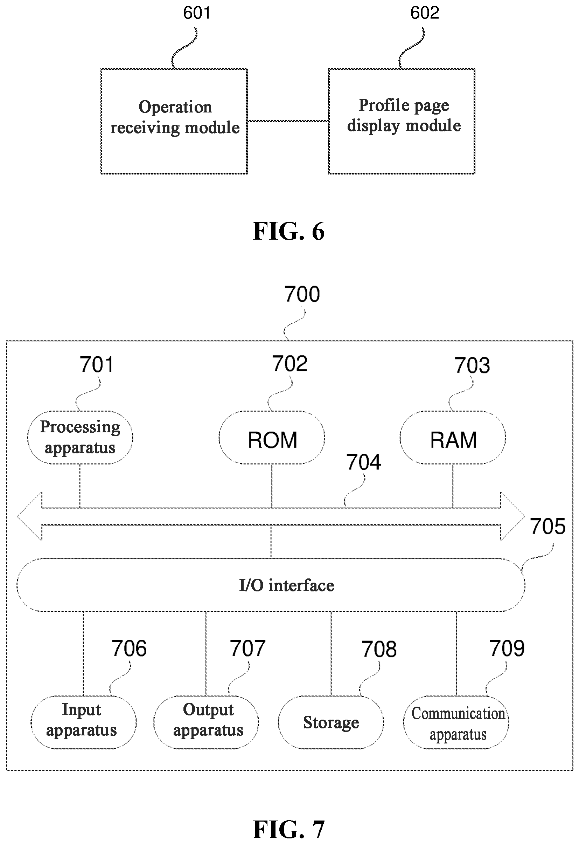

FIG. 6 is a structural block diagram of an apparatus for displaying media content information provided by an embodiment of the present disclosure. The apparatus may be implemented in software and/or hardware, may be configured in an electronic device, typically in a mobile phone or a tablet computer, and may display media content information on a personal page, for example, display the media content information in the form of user identification information on the personal page, by performing a method for displaying media content information. As shown in FIG. 6, the apparatus for displaying media content information provided by the embodiment may include an operation receiving module 601 and a personal page display module 602, where,
the operation receiving module 601 is configured to receive a personal page display operation for a target user; and
the personal page display module 602 is configured to display a personal page of the target user in response to the personal page display operation, and display preset media content information of the target user in a display area of preset user identification information in the personal page, the preset user identification information being identification information of the target user, and the preset media content information being media content information of first media content posted by the target user.

According to the apparatus for displaying media content information provided by the present embodiment, the personal page display operation for the target user is received by the operation receiving module; the personal page of the target user is displayed by the personal page display module in response to the personal page display operation; and the preset media content information of the target user is displayed in the display area of the preset user identification information in the personal page, the preset user identification information being the identification information of the target user, and the preset media content information being the media content information of the first media content posted by the target user. According to the technical solution described above, the present embodiment displays the media content information of the media content posted by the target user in the display area of the user identification information on the personal page, which may enrich the display manners of the user identification information and the media content information on the personal page, and reduce the difficulty of viewing the media content information.

Optionally, the personal page display module 602 may be configured to: take the preset media content information of the target user as the preset user identification information of the target user, and display the preset user identification information in the display area of the preset user identification information in the personal page.

Optionally, the preset media content information includes a cover page of the first media content and/or at least part of media content images of the first media content.

Optionally, the first media content is the latest media content posted by the target user, and/or the first media content is media content posted by the target user within a first preset duration.

Further, the apparatus for displaying media content information provided by the present embodiment may further include an information switching module, which is configured to switch the preset user identification information from the preset media content information to original user identification information of the target user when the display duration of the preset media content information reaches a second preset duration after the preset media content information of the target user is displayed in the display area of the preset user identification information in the personal page.

Optionally, the personal page display module 602 may be configured to: display the preset media content information of the target user in the display area of the preset user identification information in the personal page, and display preset prompt information at an associated position of the preset user identification information, the preset prompt information being used to prompt to view media content posted by the target user.

Optionally, the personal page display module 602 may be configured to: if the current user has not viewed the first media content, display the preset prompt information at the associated position of the preset user identification information using a first display style; and/or if the current user has viewed the first media content, display the preset prompt information at the associated position of the preset user identification information using a second display style.

Further, the apparatus for displaying media content information provided by the present embodiment may further include a cancel display module, which is configured to cancel displaying the preset prompt information when a current condition satisfies a cancel display condition of the preset prompt information after the preset prompt information is displayed at the associated position of the preset user identification information.

Further, the apparatus for displaying media content information provided by the present embodiment may further include a first media content display module, which is configured to, after the personal page of the target user is displayed, display a media content detail page of the target user in response to a preset trigger operation on the preset user identification information, and display the first media content in the media content detail page.

Optionally, the preset trigger operation is performed during the display of the preset media content information and/or during the display of the preset prompt information.

Further, the apparatus for displaying media content information provided by the present embodiment may further include a control display module, which is configured to display a posting control of the first media content before the personal page display operation for the target user is received, the posting control being configured to trigger to perform the personal page display operation; and a media content posting module, which is configured to post the first media content in response to the personal page display operation.

Further, the apparatus for displaying media content information provided by the present embodiment may further include a second media content display module, which is configured to display a media content display page and display second media content in the media content display page before the personal page display operation for the target user is received, the second media content being posted by the target user.

Optionally, the preset user identification information includes an avatar of the target user.

The apparatus for displaying media content information provided by the embodiment of the present disclosure may perform the method for displaying media content information provided by any embodiment of the present disclosure, and has corresponding functional modules and beneficial effects for performing the method for displaying media content information. For technical details not described in detail in the present embodiment, reference may be made to the method for displaying media content information provided by any embodiment of the present disclosure.

Reference is made to FIG. 7 below, which illustrates a schematic structural diagram of an electronic device (e.g., a terminal device) 700 suitable for implementing an embodiment of the present disclosure. The terminal device in the embodiment of the present disclosure may include, but is not limited to, mobile terminals such as a mobile phone, a notebook computer, a digital broadcast receiver, a PDA (personal digital assistant), a PAD (tablet computer), a PMP (portable multimedia player), a vehicle-mounted terminal (e.g., a vehicle navigation terminal), etc., and fixed terminals such as a digital TV, a desktop computer, etc. The electronic device shown in FIG. 7 is only an example, and should not impose any limitation on the function and scope of use of the embodiments of the present disclosure.

As shown in FIG. 7, the electronic device 700 may include a processing apparatus (such as a central processing unit, a graphics processor, etc.) 701, which may perform various appropriate actions and processes based on a program stored in a read-only memory (ROM) 702 or a program loaded into a random-access memory (RAM) 703 from a storage apparatus 708. The RAM 703 further stores various programs and data required for the operation of the electronic device 700. The processing apparatus 701, the ROM 702, and the RAM 703 are connected to each other through a bus 704. An input/output (I/O) interface 705 is also connected to the bus 704.

Usually, the following apparatuses may be connected to the I/O interface 705: an input apparatus 706 including, for example, a touch screen, a touchpad, a keyboard, a mouse, a camera, a microphone, an accelerometer, a gyroscope, etc.; an output apparatus 707 including, for example, a liquid crystal display (LCD), a speaker, a vibrator, etc.; a storage apparatus 708 including, for example, a magnetic tape, a hard disk, etc.; and a communication apparatus 709. The communication apparatus 709 may allow the electronic device 700 to perform wireless or wired communication with other devices to exchange data. Although FIG. 7 shows the electronic device 700 having various apparatuses, it should be understood that it is not required to implement or have all of the shown apparatuses. Alternatively, more or fewer apparatuses may be implemented or provided.

In particular, according to the embodiments of the present disclosure, the process described above with reference to the flowchart may be implemented as a computer software program. For example, the embodiments of the present disclosure include a computer program product, which includes a computer program carried on a non-transitory computer-readable medium, where the computer program contains program code for performing the method shown in the flowchart. In such an embodiment, the computer program may be downloaded and installed from a network via the communication apparatus 709, or installed from the storage apparatus 708, or installed from the ROM 702. When the computer program is executed by the processing apparatus 701, the above-mentioned functions defined in the method of the embodiment of the present disclosure are executed.

It should be noted that the above-mentioned computer-readable medium in the present disclosure may be a computer-readable signal medium, a computer-readable storage medium, or any combination of the two. The computer-readable storage medium may be, for example, but is not limited to, an electrical, magnetic, optical, electromagnetic, infrared, or semiconductor system, apparatus or device, or any combination of the above. More specific examples of the computer-readable storage medium may include, but are not limited to: an electrical connection having one or more wires, a portable computer magnetic disk, a hard disk, a random access memory (RAM), a read-only memory (ROM), an erasable programmable read-only memory (EPROM or flash memory), an optical fiber, a portable compact disc read-only memory (CD-ROM), an optical storage device, a magnetic storage device, or any suitable combination of the above. In the present disclosure, the computer-readable storage medium may be any tangible medium that contains or stores a program, which may be used by or in combination with an instruction execution system, apparatus, or device. In the present disclosure, the computer-readable signal medium may include a data signal propagated on a baseband or as a part of a carrier wave, and computer-readable program code is carried in the data signal. The data signal propagated in this manner may be in multiple forms, and includes, but is not limited to, an electromagnetic signal, an optical signal, or any suitable combination of the above. The computer-readable signal medium may also be any computer-readable medium other than the computer-readable storage medium, and the computer-readable signal medium may send, propagate, or transmit the program used by or in combination with the instruction execution system, apparatus, or device. The program code contained on the computer-readable medium may be transmitted in any suitable medium, including but not limited to: a wire, an optical cable, a radio frequency (RF), etc., or any suitable combination of the above.

In some implementations, the client and the server may communicate using any currently known or future developed network protocol, such as the HTTP (Hypertext Transfer Protocol), and may be interconnected with any form or medium of digital data communication (for example, a communication network). Examples of the communication network include a local area network ("LAN"), a wide area network ("WAN"), an internet (for example, the Internet), a peer-to-peer network (for example, an Ad-Hoc network), and any network currently known or to be developed in the future.

The above computer-readable medium may be contained in the above electronic device, or may exist alone without being assembled into the electronic device.

The above computer-readable medium carries one or more programs, and when the one or more programs are executed by the electronic device, the electronic device: receives a personal page display operation for a target user; displays a personal page of the target user in response to the personal page display operation; and displays preset media content information of the target user in a display area of preset user identification information in the personal page, the preset user identification information being identification information of the target user, and the preset media content information being media content information of first media content posted by the target user.

The computer program code for performing the operations of the present disclosure may be written in one or more programming languages or a combination thereof, where the programming languages include, but are not limited to, an object-oriented programming language, such as Java, Smalltalk, C++, and further include conventional procedural programming languages, such as "C" language or similar programming languages. The program code may be executed entirely on a user computer, partly on the user computer, as a stand-alone software package, partly on the user computer and partly on a remote computer, or entirely on the remote computer or server. In the case of involving the remote computer, the remote computer may be connected to the user computer through any kind of network, including a local area network (LAN) or a wide area network (WAN), or may be connected to an external computer (for example, connected via the Internet using an Internet service provider).

The flowcharts and block diagrams in the drawings illustrate the possibly implemented architectures, functions, and operations of the system, method and computer program product according to various embodiments of the present disclosure. In this regard, each block in the flowchart or block diagram may represent a module, program segment, or part of code, which contains one or more executable instructions for implementing the specified logical functions. It should also be noted that, in some alternative implementations, the functions marked in the blocks may also occur in an order different from that marked in the drawings. For example, two blocks shown in succession may actually be executed substantially in parallel, or they may sometimes be executed in the reverse order, depending on the functions involved. It should also be noted that each block in the block diagram and/or the flowchart, and a combination of the blocks in the block diagram and/or the flowchart may be implemented by a dedicated hardware-based system that executes specified functions or operations, or may be implemented by a combination of dedicated hardware and computer instructions.

The involved units described in the embodiments of the present disclosure may be implemented in software or hardware. The name of a module does not constitute a limitation on the unit itself under certain circumstances.

The functions described above herein may be performed at least in part by one or more hardware logic components. For example, non-restrictively, exemplary types of the hardware logic components that may be used include: a field programmable gate array (FPGA), an application specific integrated circuit (ASIC), an application specific standard product (ASSP), a system on chip (SOC), a complex programmable logical device (CPLD), etc.

In the context of the present disclosure, a machine-readable medium may be a tangible medium that may contain or store a program for use by or in combination with an instruction execution system, apparatus, or device. The machine-readable medium may be a machine-readable signal medium or a machine-readable storage medium. The machine-readable medium may include, but is not limited to, an electronic, magnetic, optical, electromagnetic, infrared, or semiconductor system, apparatus, or device, or any suitable combination of the above. More specific examples of the machine-readable storage medium may include an electrical connection based on one or more wires, a portable computer magnetic disk, a hard disk, a random-access memory (RAM), a read-only memory (ROM), an erasable programmable read-only memory (EPROM or flash memory), an optical fiber, a portable compact disc read-only memory (CD-ROM), an optical storage device, a magnetic storage device, or any suitable combination of the above.

According to one or more embodiments of the present disclosure, Example 1 provides a method for displaying media content information, including:
receiving a personal page display operation for a target user; and
displaying, in response to the personal page display operation, a personal page of the target user; and displaying preset media content information of the target user in a display area of preset user identification information in the personal page, the preset user identification information being identification information of the target user, and the preset media content information being media content information of first media content posted by the target user.

According to one or more embodiments of the present disclosure, Example 2 is the method according to Example 1, the displaying the preset media content information of the target user in the display area of the preset user identification information in the personal page includes:
taking the preset media content information of the target user as the preset user identification information of the target user, and displaying the preset user identification information in the display area of the preset user identification information in the personal page.

According to one or more embodiments of the present disclosure, Example 3 is the method according to Example 1, the preset media content information includes a cover page of the first media content and/or at least part of media content images of the first media content.

According to one or more embodiments of the present disclosure, Example 4 is the method according to Example 1, the first media content is the latest media content posted by the target user, and/or the first media content is media content posted by the target user within a first preset duration.

According to one or more embodiments of the present disclosure, Example 5 is the method according to Example 1, after displaying the preset media content information of the target user in the display area of the preset user identification information in the personal page, the method further includes:
when a display duration of the preset media content information reaches a second preset duration, switching the preset user identification information from the preset media content information to original user identification information of the target user.

According to one or more embodiments of the present disclosure, Example 6 is the method according to Example 1, the displaying the preset media content information of the target user in the display area of the preset user identification information in the personal page includes:
displaying the preset media content information of the target user in the display area of the preset user identification information in the personal page, and displaying preset prompt information at an associated position of the preset user identification information, the preset prompt information being used to prompt to view media content posted by the target user.

According to one or more embodiments of the present disclosure, Example 7 is the method according to Example 6, the displaying the preset prompt information at the associated position of the preset user identification information includes:
if the current user has not viewed the first media content, displaying the preset prompt information at the associated position of the preset user identification information using a first display style; and/or
if the current user has viewed the first media content, displaying the preset prompt information at the associated position of the preset user identification information using a second display style.

According to one or more embodiments of the present disclosure, Example 8 is the method according to Example 6, after the displaying the preset prompt information at the associated position of the preset user identification information, the method further includes:
cancelling display of the preset prompt information when a current condition satisfies a cancel display condition of the preset prompt information.

According to one or more embodiments of the present disclosure, Example 9 is the method according to any one of Examples 1-8, after the displaying the personal page of the target user, the method further includes:
in response to a preset trigger operation on the preset user identification information, displaying a media content detail page of the target user, and displaying the first media content in the media content detail page.

According to one or more embodiments of the present disclosure, Example 10 is the method according to Example 9, the preset trigger operation is performed during the display of the preset media content information and/or during the display of the preset prompt information.

According to one or more embodiments of the present disclosure, Example 11 is the method according to any one of Examples 1-8, before the receiving the personal page display operation for the target user, the method further includes:
displaying a posting control of the first media content, the posting control being configured to trigger to perform the personal page display operation; and
the method further includes:
   posting the first media content in response to the personal page display operation.

According to one or more embodiments of the present disclosure, Example 12 is the method according to any one of Examples 1-8, before the receiving the personal page display operation for the target user, the method further includes:
displaying a media content display page, and displaying second media content in the media content display page, the second media content being posted by the target user.

According to one or more embodiments of the present disclosure, Example 13 is the method according to any one of Examples 1-8, the preset user identification information includes an avatar of the target user.

According to one or more embodiments of the present disclosure, Example 14 provides an apparatus for displaying media content information, including:
an operation receiving module, configured to receive a personal page display operation for a target user; and
a personal page display module, configured to display a personal page of the target user in response to the personal page display operation, and display preset media content information of the target user in a display area of preset user identification information in the personal page, the preset user identification information being identification information of the target user, and the preset media content information being media content information of first media content posted by the target user.

According to one or more embodiments of the present disclosure, Example 15 provides an electronic device, including:
one or more processors; and
a memory, configured to store one or more programs,
when the one or more programs are executed by the one or more processors, the one or more processors are caused to implement the method for displaying media content information according to any of Examples 1-13.

According to one or more embodiments of the present disclosure, Example 16 provides a computer-readable storage medium, on which a computer program is stored, and when the program is executed by a processor, the method for displaying media content information according to any of Examples 1-13 is implemented.

The above description is only a preferred embodiment of the present disclosure and an illustration of the applied technical principles. Those skilled in the art should understand that the scope of disclosure involved in the present disclosure is not limited to the technical solutions formed by the specific combination of the above technical features, and should also cover other technical solutions formed by any combination of the above technical features or their equivalent features without departing from the above disclosure concept. For example, the above features and the technical features with similar functions disclosed in the present disclosure (but not limited to) are replaced each other to form a technical solution.

In addition, although the operations are depicted in a particular order, this should not be understood as requiring these operations to be performed in the particular order shown or in a sequential order. Under certain circumstances, multitasking and parallel processing may be advantageous. Likewise, although the above discussion contains several specific implementation details, these should not be construed as limiting the scope of the present disclosure. Certain features that are described in the context of separate embodiments may also be implemented in combination in a single embodiment. Conversely, various features described in the context of a single embodiment may also be implemented in multiple embodiments individually or in any suitable subcombination.

Although the subject matter has been described in language specific to structural features and/or logical actions of the method, it should be understood that the subject matter defined in the appended claims is not necessarily limited to the specific features or actions described above. On the contrary, the specific features and actions described above are only example forms of implementing the claims.

## Claims

1. A method for displaying media content information, comprising:
receiving a personal page display operation for a target user;
displaying, in response to the personal page display operation, a personal page of the target user; and
displaying preset media content information of the target user in a display area of preset user identification information in the personal page, the preset user identification information being identification information of the target user, and the preset media content information being media content information of first media content posted by the target user.

2. The method of claim 1, wherein displaying the preset media content information of the target user in the display area of the preset user identification information in the personal page comprises:
taking the preset media content information of the target user as the preset user identification information of the target user, and displaying the preset user identification information in the display area of the preset user identification information in the personal page.

3. The method of claim 1, wherein the preset media content information comprises a cover page of the first media content and/or at least part of media content images of the first media content.

4. The method of claim 1, wherein the first media content is the latest media content posted by the target user, and/or the first media content is media content posted by the target user within a first preset duration.

5. The method of claim 1, wherein after displaying the preset media content information of the target user in the display area of the preset user identification information in the personal page, the method further comprises:
switching, in response to a display duration of the preset media content information reaching a second preset duration, the preset user identification information from the preset media content information to original user identification information of the target user.

6. The method of claim 1, wherein displaying the preset media content information of the target user in the display area of the preset user identification information in the personal page comprises:
displaying the preset media content information of the target user in the display area of the preset user identification information in the personal page, and displaying preset prompt information at an associated position of the preset user identification information, the preset prompt information being used to prompt to view media content posted by the target user.

7. The method of claim 6, wherein displaying the preset prompt information at the associated position of the preset user identification information comprises:
displaying, in response to a current user having not viewed the first media content, the preset prompt information at the associated position of the preset user identification information with a first display style; and/or
displaying, in response to the current user having viewed the first media content, the preset prompt information at the associated position of the preset user identification information with a second display style.

8. The method of claim 6, wherein after displaying the preset prompt information at the associated position of the preset user identification information, the method further comprises:
in response to a current condition satisfying a cancel display condition of the preset prompt information, cancelling display of the preset prompt information.

9. The method of any of claims 1-8, wherein after displaying the personal page of the target user, the method further comprises:
displaying, in response to a preset trigger operation on the preset user identification information, a media content detail page of the target user, and displaying the first media content in the media content detail page.

10. The method of claim 9, wherein the preset trigger operation is performed during display of the preset media content information and/or during display of the preset prompt information.

11. The method of any of claims 1-8, wherein before receiving the personal page display operation for the target user, the method further comprises:
displaying a posting control of the first media content, the posting control being configured to trigger to perform the personal page display operation; and
the method further comprises:
posting, in response to the personal page display operation, the first media content.

12. The method of any of claims 1-8, wherein before receiving the personal page display operation for the target user, the method further comprises:
displaying a media content display page, and displaying second media content in the media content display page, the second media content being posted by the target user.

13. The method of any of claims 1-8, wherein the preset user identification information comprises an avatar of the target user.

14. An apparatus for displaying media content information, comprising:
an operation receiving module, configured to receive a personal page display operation for a target user;
a personal page display module, configured to display, in response to the personal page display operation, a personal page of the target user; and
display preset media content information of the target user in a display area of preset user identification information in the personal page, the preset user identification information being identification information of the target user, and the preset media content information being media content information of first media content posted by the target user.

15. An electronic device, comprising:
at least one processor; and
a memory communicatively connected to the at least one processor;
the memory is stored with a computer program executable by the at least one processor, and the computer program is executed by the at least one processor, to cause the at least one processor to perform the method for displaying media content information of any of claims 1-13.

16. A computer-readable storage medium, on which computer instructions are stored, and when the computer instructions are executed by a processor, the processor is caused to implement the method for displaying media content information of any of claims 1-13.
